# EUROPÄISCHE PATENTSCHRIFT

(11) **EP 0 523 485 B1**
(45) Veröffentlichungstag und Bekanntmachung des Hinweises auf die Patenterteilung: **13.12.1995**
(21) Anmeldenummer: 92111371.8
(22) Anmeldetag: 04.07.1992
(51) Int. Cl.: C08G 14/10

(54) **Modifizierte Melamin-Formaldehyd-Harze**
Modified melamine-formaldehyde resins
Résines mélamine-formaldehyde modifiées

(30) Priorität: 12.07.1991 DE 4123050
(43) Veröffentlichungstag der Anmeldung: 20.01.1993
(73) Patentinhaber: BASF Aktiengesellschaft, 67063 Ludwigshafen (DE)
(72) Erfinder: Weiser, Jürgen, Dr., W-6905 Schriesheim (DE); Reuther, Wolfgang, Dr., W-6900 Heidelberg (DE); Fikentscher, Rolf, Dr., W-6700 Ludwigshafen (DE); Fath, Wolfgang, Dr., W-6945 Hirschberg (DE); Berbner, Heinz, W-6942 Moerlenbach (DE); Zettler, Hans Dieter, W-6718 Grünstadt (DE); Völker, Heinz, Dr., W-6703 Limburgerhof (DE)

(56) Entgegenhaltungen:
- EP-A- 0 221 330
- GB-A- 2 203 746
- US-A- 4 088 620
- PAJ/JPO, 6/5 81 ; & JP-A-56049716

## Beschreibung

Die Erfindung betrifft Kondensationsprodukte, erhältlich durch Kondensation eines Gemisches, enthaltend als wesentliche Komponenten
(A) 90 bis 99,9 Mol-% eines Gemisches bestehend im wesentlichen aus
   (a) 30 bis 99 Mol-% Melamin und
   (b) 1 bis 70 Mol-% eines substituierten Melamins der allgemeinen Formel I 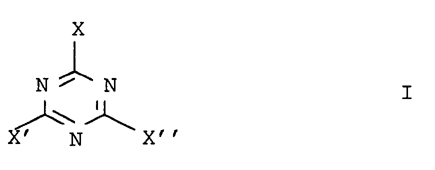 in der X, X' und X'' ausgewählt sind aus der Gruppe bestehend aus -NH₂, -NHR und -NRR', und X, X' und X'' nicht gleichzeitig -NH₂ sind, und R und R' ausgewählt sind aus der Gruppe bestehend aus Hydroxy-C₂-C₄-alkyl-, Hydroxy-C₂-C₄-alkyl-(oxa-C₂-C₄-alkyl)ₙ, mit n = 1 bis 5, und Amino-C₂-C₁₂-alkyl, oder Mischungen von Melaminen I, und
(B) 0,1 bis 10 Mol-%, bezogen auf (A) und (B), unsubstituierten oder mit Resten, ausgewählt aus der Gruppe aus C₁-C₉-Alkyl und Hydroxy, substituierten Phenolen, mit zwei oder drei Phenolgruppen substituierten C₁-C₄-Alkanen, Di(hydroxyphenyl)sulfone oder Mischungen dieser Phenole,
mit
Formaldehyd oder Formaldehyd-liefernden Verbindungen, wobei das Molverhältnis von Melaminen zu Formaldehyd im Bereich von 1:1,15 bis 1:4,5 liegt.

Ferner betrifft die Erfindung ein Verfahren zur Herstellung dieser Kondensationsprodukte, deren Verwendung zur Herstellung von Fasern und Schaumstoffen und Formkörper, erhältlich aus diesen Produkten.

In der DE-PS 20 20 481 wird ein aminoplastischer Holzleim beschrieben, der aus Melamin oder einer Mischung aus Melamin und Harnstoff, Formaldehyd und 5 bis 20 Mol-% eines Phenols aufgebaut ist.

Des weiteren sind aus den DE-A 29 15 457, DE-A 23 64 091, EP-A 221 330 und EP-A 408 947 Formkörper wie Schaumstoffe und Fasern aus Melamin-Formaldehyd-Kondensationsharzen bekannt, in denen Melamin ganz oder teilweise durch substituierte Melamine wie hydroxyalkylsubstituierte oder hydroxyalkyl-oxa-alkylsubstituierte Melamine ersetzt ist.

Nachteilig an den bisher bekannten Melamin-Formaldehyd-Harzen ist ihre unzureichende Hydrolysestabilität verbunden mit der Abgabe von Formaldehyd in unerwünscht hohen Mengen.

Der Erfindung lag daher die Aufgabe zugrunde, Melamin-Formaldehyd-Kondensationsprodukte bereitzustellen, die in ausgehärteter Form die oben genannten Nachteile nicht aufweisen.

Demgemäß wurden die eingangs definierten Kondensationsprodukte gefunden.

Außerdem wurden ein Verfahren zur Herstellung dieser Kondensationsprodukte, deren Verwendung zur Herstellung von Fasern und Schaumstoffen sowie Formkörper, erhältlich aus diesen Produkten, gefunden.

Die erfindungsgemäßen Melamin-Harze enthalten als Monomerbaustein (A) 90 bis 99,9 Mol-% eines Gemisches bestehend im wesentlichen aus 30 bis 99, bevorzugt 50 bis 99, besonders bevorzugt 85 bis 95 Mol-% Melamin und 1 bis 70, bevorzugt 1 bis 50, besonders bevorzugt 5 bis 15 Mol-% eines substituierten Melamins I oder Mischungen substituierter Melamine I.

Als weiteren Monomerbaustein (B) enthalten die Melamin-Harze 0,1 bis 10 Mol-%, bezogen auf die Gesamtmolzahl an Monomerbausteinen (A) und (B), eines Phenols oder eines Gemisches von Phenolen.

Die erfindungsgemäßen Kondensationsprodukte sind erhältlich durch Umsetzung der Komponenten (A) und (B) mit Formaldehyd oder Formaldehydliefernden Verbindungen, wobei das Molverhältnis von Melaminen zu Formaldehyd im Bereich von 1:1,15 bis 1:4,5, bevorzugt von 1:1,8 bis 1:3,0 liegt.

Als substituierte Melamine der allgemeinen Formel I 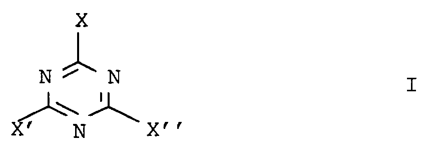
kommen solche in Betracht, in denen X, X' und X'' ausgewählt sind aus der Gruppe bestehend aus -NH₂, -NHR und -NRR', wobei X, X' und X'' nicht gleichzeitig -NH₂ sind, und R und R' ausgewählt sind aus der Gruppe bestehend aus Hydroxy-C₂-C₁₀-alkyl, Hydroxy-C₂-C₄-alkyl-(oxa-C₂-C₄-alkyl)ₙ, mit n = 1 bis 5, und Amino-C₂-C₁₂-alkyl.

Als Hydroxy-C₂-C₁₀-alkyl-Gruppen wählt man bevorzugt Hydroxy-C₂-C₆-alkyl wie 2-Hydroxyethyl, 3-Hydroxy-n-propyl, 2-Hydroxyisopropyl, 4-Hydroxy-n-butyl, 5-Hydroxy-n-pentyl, 6-Hydroxy-n-hexyl, 3-Hydroxy-2,2-dimethylpropyl, bevorzugt Hydroxy-C₂-C₄-alkyl wie 2-Hydroxyethyl, 3-Hydroxy-n-propyl, 2-Hydroxyisopropyl und 4-Hydroxy-n-butyl, besonders bevorzugt 2-Hydroxyethyl und 2-Hydroxyisopropyl.

Als Hydroxy-C₂-C₄-alkyl-(oxa-C₂-C₄-alkyl)ₙ-Gruppen wählt man bevorzugt solche mit n = 1 bis 4, besonders bevorzugt solche mit n = 1 oder 2 wie 5-Hydroxy-3-oxa-pentyl, 5-Hydroxy-3-oxa-2,5-dimethyl-pentyl, 5-Hydroxy-3-oxa-1,4-dimethyl-pentyl, 5-Hydroxy-3-oxa-1,2,4,5-tetramethyl-pentyl, 8-Hydroxy-3,6-dioxa-octyl.

Als Amino-C₂-C₁₂-alkyl-Gruppen kommen bevorzugt Amino-C₂-C₈-alkyl-Gruppen wie 2-Aminoethyl, 3-Aminopropyl, 4-Aminobutyl, 5-Aminopentyl, 6-Aminohexyl, 7-Aminoheptyl sowie 8-Aminooctyl, besonders bevorzugt 2-Aminoethyl und 6-Aminohexyl, ganz besonders bevorzugt 6-Aminohexyl, in Betracht.

Für die Erfindung besonders geeignete substituierte Melamine sind folgende Verbindungen:
mit der 2-Hydroxyethylamino-Gruppe substituierte Melamine wie 2-(2-Hydroxyethylamino)-4,6-diamino-1,3,5-triazin, 2,4-Di-(2-hydroxyethylamino)-6-amino-1,3,5-triazin, 2,4,6-Tris-(2-hydroxyethylamino)-1,3,5-triazin, mit der 2-Hydroxyisopropylamino-Gruppe substituierte Melamine wie 2-(2-Hydroxyisopropylamino)-4,6-diamino-1,3,5-triazin, 2,4-Di-(2-hydroxyisopropylamino)-6-amino-1,3,5-triazin, 2,4,6-Tris-(2-hydroxyisopropylamino)-1,3,5-triazin, mit der 5-Hydroxy-3-oxa-pentylamino-Gruppe substituierte Melamine wie 2-(5-Hydroxy-3-oxa-pentylamino)-4,6-diamino-1,3,5-triazin, 2,4-Di-(5-hydroxy-3-oxa- pentylamino)-6-amino-1,3,5-triazin, 2,4,6-Tris-(5-hydroxy-3-oxa-pentylamino)-1,3,5-triazin, mit der 6-Aminohexylamino-Gruppe substituierte Melamine wie 2-(6-Aminohexylamino)-4,6-diamino-1,3,5-triazin, 2,4-Di-(6-aminohexylamino)-6-amino-1,3,5-triazin, 2,4,6-Tris-(6- aminohexylamino)-1,3,5- triazin oder Gemische dieser Verbindungen, beispielsweise ein Gemisch aus 10 Mol-% 2-(5-Hydroxy-3-oxa-pentylamino)-4,6-diamino-1,3,5-triazin, 50 Mol-% 2,4-Di-(5-hydroxy-3-oxa-pentylamino)-6-amino-1,3,5-triazin und 40 Mol-% 2,4,6-Tris-(5-hydroxy-3- oxa-pentylamino)-1,3,5-triazin.

Als Phenole (B) eignen sich ein oder zwei Hydroxygruppen enthaltende Phenole wie unsubstituierte oder mit Resten, ausgewählt aus der Gruppe aus C₁-C₉-Alkyl und Hydroxy, substituierte Phenole sowie mit zwei oder drei Phenolgruppen substituierte C₁-C₄-Alkane, Di(hydroxyphenyl)sulfone oder Mischungen dieser Phenole.

Als bevorzugte Phenole kommen in Betracht Phenol, 4-Methyl-phenol, 4-tert.-Butyl-phenol, 4-n-Octyl-phenol, 4-n-Nonyl-phenol, Brenzcatechin, Resorcin, Hydrochinon, 2,2-Bis(4-hydroxyphenyl)propan, 4,4'-Dihydroxydiphenylsulfon, besonders bevorzugt Phenol, Resorcin und 2,2-Bis(4-hydroxyphenyl)propan.

Formaldehyd setzt man in der Regel als wäßrige Lösung mit einer Konzentration von zum Beispiel 40 bis 50 Gew.-% oder in Form von bei der Umsetzung mit (A) und (B) Formaldehyd liefernden Verbindungen, beispielsweise als oligomeren oder polymeren Formaldehyd in fester Form wie Paraformaldehyd, 1,3,5-Trioxan oder 1,3,5,7-Tetroxocan ein.

Für die Herstellung von Fasern verwendet man zweckmäßig 1 bis 50, vorzugsweise 5 bis 15 und insbesondere 7 bis 12 Mol-% des substituierten Melamins sowie 0,1 bis 9,5, bevorzugt 1 bis 5 Mol-% eines der oben angeführten Phenole oder Mischungen derselben.

Für die Herstellung von Schaumstoffen verwendet man zweckmäßig 0,5 bis 20, vorzugsweise 1 bis 10 und insbesondere 1,5 bis 5 Mol-% des substituierten Melamins oder Mischungen von substituierten Melaminen sowie 0,1 bis 5, bevorzugt 1 bis 3 Mol-% eines der oben angeführten Phenole oder Mischungen davon.

Zur Herstellung der Harze polykondensiert man Melamin, substituiertes Melamin und Phenol zusammen mit Formaldehyd bzw. Formaldehyd-liefernden Verbindungen. Man kann dabei alle Komponenten gleich zu Beginn vorlegen oder man kann sie portionsweise und sukzessive zu Reaktion bringen und den dabei gebildeten Vorkondensaten nachträglich weiteres Melamin, substituiertes Melamin oder Phenol zufügen.

Die Polykondensation führt man in der Regel in an sich bekannter Weise durch (s. EP-A 355 760, Houben-Weyl, Bd.14/2, S.357 ff).

Die Reaktionstemperaturen wählt man dabei im allgemeinen in einem Bereich von 20 bis 150, bevorzugt von 40 bis 140°C.

Der Reaktionsdruck ist in der Regel unkritisch. Man arbeitet im allgemeinen in einem Bereich von 100 bis 500 kPa, bevorzugt 100 bis 300 kPa.

Man kann die Reaktion mit oder ohne Lösungsmittel durchführen. In der Regel setzt man beim Einsatz von wäßriger Formaldehydlösung kein Lösungsmittel zu. Bei Verwendung von Formaldehyd gebunden in fester Form wählt man als Lösungsmittel üblicherweise Wasser, wobei die verwendete Menge in der Regel im Bereich von 5 bis 40, bevorzugt von 15 bis 25 Gew.-%, bezogen auf die Gesamtmenge an eingesetzten Monomeren, liegt.

Ferner führt man die Polykondensation im allgemeinen in einem pH-Bereich oberhalb von 7 aus. Bevorzugt ist der pH-Bereich von 7,5 bis 10,0, besonders bevorzugt von 8 bis 10.

Des weiteren kann man dem Reaktionsgemisch geringe Mengen üblicher Zusätze wie Alkalimetallsulfiten, z.B. Natriumdisulfit und Natriumsulfit, Alkalimetallformiaten, z.B. Natriumformiat, Alkalimetallcitrate, z.B. Natriumcitrat, Phosphate, Polyphosphate, Harnstoff, Dicyandiamid oder Cyanamid hinzufügen. Man kann sie als reine Einzelverbindungen oder als Mischungen untereinander jeweils in Substanz oder als wäßrige Lösungen vor, während oder nach der Kondensationsreaktion zusetzen.

Andere Modifizierungsmittel sind Amine sowie Aminoalkohole wie Diethylamin, Ethanolamin, Diethanolamin oder 2-Diethylaminoethanol.

Als weitere Zusatzstoffe kommen Füllstoffe, Emulgatoren oder Treibmittel in Betracht.

Als Füllstoffe kann man beispielsweise faser- oder pulverförmige anorganische Verstärkungsmittel oder Füllstoffe wie Glasfasern, Metallpulver, Metallsalze oder Silikate, z.B. Kaolin, Talkum, Schwerspat, Quarz oder Kreide, ferner Pigmente und Farbstoffe einsetzen. Als Emulgatoren verwendet man in der Regel die üblichen nichtionogenen, anionenaktiven oder kationaktiven organischen Verbindungen mit langkettigen Alkylresten. Bei der Verarbeitung der nicht ausgehärteten Harze zu Schäumen kann man als Treibmittel beispielsweise Pentan einsetzen.

Die Polykondensation kann man diskontinuierlich oder kontinuierlich, beispielsweise in einem Extruder (s. EP-A 355 760), nach an sich bekannten Methoden durchführen.

Die Herstellung von Formkörpern durch Härtung der erfindungsgemäßen Kondensationsprodukte erfolgt in üblicher Weise durch Zusatz von geringen Mengen an Säuren wie Ameisensäure, Schwefelsäure oder Ammoniumchlorid.

Schaumstoffe können hergestellt werden, in dem man eine wäßrige Lösung oder Dispersion, welche das noch nicht ausgehärtete Kondensat, einen Emulgator, ein Treibmittel und einen Härter, sowie gegebenenfalls übliche Zusatzstoffe` wie oben aufgeführt, enthält, verschäumt und anschließend den Schaum aushärtet. Ein solches Verfahren ist in der DE-A 29 15 457 eingehend beschrieben.

Zur Herstellung von Fasern verspinnt man in der Regel das erfindungsgemäße Melamin-Harz in an sich bekannter Weise beispielsweise nach Zusatz eines Härters bei Raumtemperatur in einer Rotationsspinnapparatur und härtet anschließend die Rohfasern in einer erhitzten Atmosphäre aus, oder man verspinnt in einer erhitzten Atmosphäre, verdampft dabei gleichzeitig das als Lösungsmittel dienende Wasser und härtet das Kondensat aus. Ein solches Verfahren ist in der DE-A 23 64 091 eingehend beschrieben.

Die erfindungsgemäßen Kondensationsprodukte, insbesondere daraus hergestellte Schäume und Fasern, zeichnen sich gegenüber dem Stand der Technik durch eine verbesserte Hydrolysestabilität und eine reduzierte Formaldehyd-Emission aus. Die erfindungsgemäßen Fasern kann man als solche oder in Form von Mischungen, beispielsweise mit anderen natürlichen oder synthetischen Fasern, verwenden. Man kann sie zur Herstellung von Geweben, Gewirken und Vliesen, beispielsweise zur Herstellung von feuerfesten Anzügen, einsetzen.

### Beispiele

Die nach den jeweiligen Kondensationsreaktionen erhaltenen erfindungsgemäßen Harzmassen wurden mit jeweils 2 Gew.-% (bezogen auf das Gesamtgewicht) einer 35 gew.-%igen Ameisensäure als Härter versetzt und dann bei 30°C durch eine Rotationsspinnapparatur mit einem Düsendurchmesser von 500 »m gedrückt. Die so erhaltenen Rohfasern wurden anschließend während 1,5 h auf 230°C erhitzt. Dabei fielen Fasern mit einem Durchmesser von 5 bis 50 »m und einer Länge von 1 bis 200 cm an.

Die in den Beispielen angegebenen Viskositätswerte wurden mit einem Kegel/Platte-Viskosimeter (Fa. Epprecht Instruments+Controls, Meßkegel "Typ D") bei einem Schergefälle von 20 sec⁻¹ bei einer Temperatur von 20°C bestimmt.

Die Formaldehyd-Emission wurde nach der Testmethode 112 - 1978 der American Association of Textile Chemists and Colorists (AATCC) bestimmt.

Hierbei wurden jeweils eine genau abgewogene Menge an Produkt (ca. 1 g) in einer Glasfritte in einem geschlossenen Gefäß, das 50 ml Wasser enthielt, so angeordnet, daß die Probe mit dem Wasser nicht in direkte Berührung kam. Danach wurden die Probengefäße während 20 h auf eine Temperatur von 49±1°C erhitzt. Dann wurde jeweils während ca. 90 min auf Raumtemperatur abkühlen gelassen, die Proben aus den Gefäßen entnommen und das jeweilige Probengefäß geschüttelt. Anschließend wurden jeweils 1 ml der Probenlösung mit 10 ml einer wäßrigen Reagenzlösung enthaltend 1,5 g Ammoniumacetat, 0,03 ml Eisessig und 0,02 ml Acetylaceton versetzt und 7 min bei 58°C im Wasserbad erhitzt. Hierbei bildeten sich je nach Formaldehyd-Gehalt mehr oder weniger gelb gefärbte Lösungen, deren Extinktionen nach dem Abkühlen (ca. 30 min) bei 412 nm in einem Spektralphotometer gemessen wurden.

Vor Beginn der Messung wurde der Nullpunkt des Photometers mit einer Blindprobe (10 ml Reagenzlösung + 1 ml dest. Wasser) eingestellt.

Zur Bestimmung des Formaldehyd-Gehaltes wurde mit Hilfe von Standardlösungen, die einen definierten Gehalt an Formaldehyd aufwiesen und deren Extinktionen nach der oben beschriebenen Methode ermittelt wurden, eine Eichkurve erstellt, aus der sich dann bei gegebenem Extinktionswert die Konzentration an Formaldehyd ermitteln ließ.

Zur Prüfung der Hydrolysebeständigkeit wurden jeweils ca. 3 g Fasern für 24 h in 1 l Wasser zum Rückfluß erhitzt. Danach wurden die Fasern bei 90°C im Trockenschrank bis zur Gewichtskonstanz getrocknet.

### Beispiel 1

(a) Melamin-Harz ohne Phenol (Vergleichsbeispiel)
1262,8 g (10,01 mol) Melamin, 456,5 g einer 80 gew.-%igen, wäßrigen Lösung eines Gemisches aus 10 Mol-% 2-(5-Hydroxy-3-oxa-pentylamino)-4,6-diamino-1,3,5-triazin, 50 Mol-% 2,4-Di-(5-hydroxy-3-oxa-pentylamino)-6-amino-1,3,5-triazin und 40 Mol-% 2,4,6-Tris-(5-hydroxy-3-oxa-pentylamino)-1,3,5-triazin ("HOM") (1,11 mol), 86,6 g Dicyanamid und 70,0 g Natriumdisulfit wurden mit 553,1 g Paraformaldehyd und 5,0 g 2-Diethylamino-ethanol und 896,3 g einer 40 gew.-%igen, wäßrigen Formaldehyd-lösung gemischt und kontinuierlich in einem Extruder (Werner&Pfleiderer, ZHS 130) bei einer Temperatur von 120°C auf eine Viskosität von 500 Pa*sec kondensiert. Die Bestimmung der Formaldehyd-Emission und des Gewichtsverlustes ergab folgende Werte:

| | |
|---|---|
| Formaldehydemission: | 2500 ppm |
| Gew.-Verlust durch Hydrolyse: | 60 Gew.-% |

(b) Melamin-Harz mit 5,0 Mol-% Phenol
1286,5 g (10,20 mol) Melamin, 486 g einer 80 gew.-%igen, wäßrigen Lösung von HOM (1,18 mol), 93,8 g Dicyandiamid, 75,3 g Natriumdisulfit und 56,5 g (0,60 mol) Phenol wurden zusammen mit 600,4 g Paraformaldehyd, 5,3 g 2-Diethylamino-ethanol und 967,2 g einer 40 gew.-% wäßrigen Formaldehydlösung gemischt. Die Reaktionsmischung wurde dann solange zum Rückfluß erhitzt, bis sie eine Viskosität von 500 Pa*sec aufwies. Die Bestimmung der Formaldehyd-Emission und des Gewichtsverlustes ergab folgende Werte:

| | |
|---|---|
| Formaldehydemission: | 1700 ppm |
| Gew.-Verlust durch Hydrolyse: | 30 Gew.-% |

### Beispiel 2

(a) Melamin-Harz ohne Phenol (Vergleich)
1362,2 g (10,81 mol) Melamin, 486,0 g einer 80 gew.-%igen, wäßrigen Lösung von HOM (1,18 mol), 93,8 g Dicyanamid und 37,7 g Natriumdisulfit wurden mit 603,4 Paraformaldehyd, 5,3 g 2-Diethylaminoethanol und 956,0 g einer 40 gew.-%igen, wäßrigen Formaldehydlösung gemischt. Die Reaktionsmischung wurde dann solange zum Rückfluß erhitzt, bis sie eine Viskosität von 500 Pa*sec aufwies. Die Bestimmung der Formaldehyd-Emission und des Gewichtsverlustes ergab folgende Werte:

| | |
|---|---|
| Formaldehydemission: | 2380 ppm |
| Gew.-Verlust durch Hydrolyse: | 56 Gew.-% |

(b) Melamin-Harz mit 10 Mol-% Phenol
1292,8 g (10,26 mol) Melamin, 407,4 g einer 80 gew.-%igen, wäßrigen Lösung von HOM (0,99 mol), 98,0 g Dicyandiamid, 35,8 g Natriumdisulfit und 107,3 g (1,14 mol) Phenol wurden zusammen mit 554,5 g Paraformaldehyd, 5,0 g 2-Diethylamino-ethanol und 956,5 g einer 40 gew.-% wäßrigen Formaldehydlösung gemischt. Die Reaktionsmischung wurde dann solange zum Rückfluß erhitzt, bis sie eine Viskosität von 500 Pa*sec aufwies. Die Bestimmung der Formaldehyd-Emission und des Gewichtsverlustes ergab folgende Werte:

| | |
|---|---|
| Formaldehydemission: | 1160 ppm |
| Gew.-Verlust durch Hydrolyse: | 28 Gew.-% |

### Beispiel 3

(a) Melamin-Harz ohne Phenol (Vergleich)
1769 g (14,03 mol) Melamin und 618 g einer 80 gew.-%igen, wäßrigen Lösung von HOM (1,50 mol) wurden mit 557,7 g Paraformaldehyd, 6,9 g 2-Diethylamino-ethanol und 1063 g einer 40 gew.-%igen, wäßrigen Formaldehydlösung gemischt. Die Reaktions-mischung wurde dann solange zum Rückfluß erhitzt, bis sie eine Viskosität von 500 Pa*sec aufwies. Die Bestimmung der Formaldehyd-Emission und des Gewichtsverlustes ergab folgende Werte:

| | |
|---|---|
| Formaldehydemission: | 675 ppm |
| Gew.-Verlust durch Hydrolyse: | 14 Gew.-% |

(b) Melamin-Harz mit 3 Mol-% Phenol
1791,7 g (14,22 mol) Melamin und 626,1 g einer 80 gew.-%igen, wäßrigen Lösung von HOM (1,52 mol) und 44,6 g (0,47 mol) Phenol wurden zusammen mit 557,9 g Paraformaldehyd, 7,0 g 2-Diethylaminoethanol und 1093,9 g einer 40 gew.-% wäßrigen Formaldehydlösung gemischt. Die Reaktionsmischung wurde dann solange zum Rückfluß erhitzt, bis sie eine Viskosität von 500 Pa*sec aufwies. Die Bestimmung der Formaldehyd-Emission und des Gewichtsverlustes ergab folgende Werte:

| | |
|---|---|
| Formaldehydemission: | 430 ppm |
| Gew.-Verlust durch Hydrolyse: | 10 Gew.-% |

## Patentansprüche

1. Kondensationsprodukte, erhältlich durch Kondensation eines Gemisches, enthaltend als wesentliche Komponenten
(A) 90 bis 99,9 Mol-% eines Gemisches bestehend im wesentlichen aus
(a) 30 bis 99 Mol-% Melamin und
(b) 1 bis 70 Mol-% eines substituierten Melamins der allgemeinen Formel I 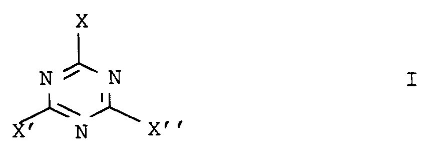 in der X, X' und X'' ausgewählt sind aus der Gruppe bestehend aus -NH₂, -NHR und -NRR', und X, X' und X'' nicht gleichzeitig -NH₂ sind, und R und R' ausgewählt sind aus der Gruppe bestehend aus Hydroxy-C₂-C₁₀-alkyl, Hydroxy-C₂-C₄-alkyl-(oxa-C₂-C₄-alkyl)ₙ, mit n = 1 bis 5, und Amino-C₂-C₁₂-alkyl, oder Mischungen von Melaminen I, und
(B) 0,1 bis 10 Mol-%, bezogen auf (A) und (B), unsubstituierten oder mit Resten, ausgewählt aus der Gruppe aus C₁-C₉-Alkyl und Hydroxy, substituierten Phenolen, mit zwei oder drei Phenolgruppen substituierten C₁-C₄-Alkanen, Di(hydroxyphenyl)sulfone oder Mischungen dieser Phenole,
mit
Formaldehyd oder Formaldehyd-liefernden Verbindungen, wobei das Molverhältnis von Melaminen zu Formaldehyd im Bereich von 1:1,15 bis 1:4,5 liegt.

2. Kondensationsprodukte nach Anspruch 1, dadurch gekennzeichnet, daß man als substituiertes Melamin ein mit der 2-Hydroxyethylamino-Gruppe substituiertes Melamin, ein mit der 2-Hydroxyisopropylamino-Gruppe substituiertes Melamin, ein mit der 5-Hydroxy-3-oxa-pentylamino-Gruppe substituiertes Melamin oder ein mit der 6-Aminohexylamino-Gruppe substituiertes Melamin einsetzt.

3. Kondensationsprodukte nach den Ansprüchen 1 bis 2, dadurch gekennzeichnet, daß man ein Phenol, ausgewählt aus der Gruppe aus Phenol, 2,2-Bis-(4-hydroxyphenyl)propan und Resorcin, einsetzt.

4. Verfahren zur Herstellung von Kondensationsprodukten gemäß Anspruch 1, dadurch gekennzeichnet, daß man die Komponenten (A) und (B) mit Formaldehyd oder Formaldehyd-liefernden Verbindungen bei 20 bis 150°C und Drücken von 100 bis 500 kPa in Masse oder in einem Lösungsmittel kondensiert.

5. Verwendung der Kondensationsprodukte gemäß Anspruch 1 zur Herstellung von Formkörpern, insbesondere Fasern und Schaumstoffen.

6. Formkörper, erhältlich aus Kondensationsprodukten gemäß Anspruch 1.

## Claims

1. Condensation products obtainable by condensation of a mixture containing as essential components
(A) from 90 to 99.9 mol% of a mixture consisting essentially of
(a) from 30 to 99 mol% of melamine and
(b) from 1 to 70 mol% of a substituted melamine of the general formula I 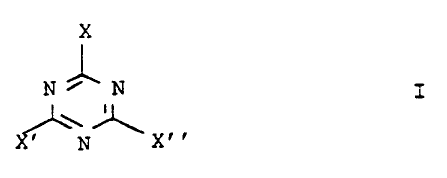 where X, X' and X'' are each selected from the group consisting of -NH₂, -NHR and -NRR', and X, X' and X'' are not all -NH₂, and R and R' are each selected from the group consisting of hydroxy-C₂-C₁₀-alkyl, hydroxy-C₂-C₄-alkyl-(oxa-C₂-C₄-alkyl)ₙ, where n is from 1 to 5, and amino-C₂-C₁₂-alkyl, or mixtures of melamines I, and
(B) from 0.1 to 10 mol%, based on (A) and (B), of phenols which are unsubstituted or substituted by radicals selected from the group consisting of C₁-C₉-alkyl and hydroxyl, C₁-C₄-alkanes substituted by two or three phenol groups, di(hydroxyphenyl) sulfones, or mixtures of these phenols,
with
formaldehyde or formaldehyde-donating compounds in a molar ratio of melamines to formaldehyde within the range from 1:1.15 to 1:4.5.

2. Condensation products as claimed in claim 1, characterized in that the substituted melamine used is a 2-hydroxyethylamino-substituted melamine, a 2-hydroxy-isopropylamino-substituted melamine, a 5-hydroxy-3-oxa-pentylamino-substituted melamine or a 6-aminohexylamino-substituted melamine.

3. Condensation products as claimed in claims 1 to 2, characterized in that the phenol used is selected from the group consisting of phenol, 2,2-bis(4-hydroxyphenyl)-propane and resorcinol.

4. A process for producing condensation products as set forth in claim 1, characterized in that the components (A) and (B) are condensed with formaldehyde or formaldehyde-donating compounds at from 20 to 150°C and pressures from 100 to 500 kPa in substance or in a solvent.

5. The use of the condensation products of claim 1 for producing molded articles, in particular fibers and foams.

6. Molded articles obtainable from condensation products as set forth in claim 1.

## Revendications

1. Produits de condensation, obtenus par condensation d'un mélange qui contient, en tant que composants essentiels,
A) 90 à 99,9% en moles d'un mélange composé essentiellement de
(a) 30 à 99% en moles de mélamine et
(b) 1 à 70% en moles d'une mélamine substituée de formule générale I 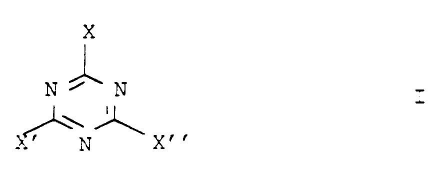 dans laquelle X, X' et X'' sont choisis dans le groupe constitué par -NH₂, -NHR et -NRR', X, X' et X'' n'étant pas en même temps des groupements -NH₂, et R et R' étant choisis dans le groupe constitué par les groupements hydroxyalkyle en C₂-C₁₀, hydroxyalkyle en C₂-C₄-(oxaalkyle en C₂-C₄)ₙ (avec n = 1 à 5) et aminoalkyle en C₂-C₁₂, ou de mélanges de melamines I, et
B) 0,1 à 10% en moles, par rapport à (A) et (B), de phénols non substitués ou substitués par des restes choisis dans le groupe des restes alkyle en C₁-C₉ et hydroxy, d'alcanes en C₁-C₄ substitués par deux ou trois groupements phénol, de di(hydroxyphényl)sulfones ou de mélanges de ces phénols,
avec
du formaldéhyde ou des composés générateurs de formaldéhyde, le rapport molaire des mélamines au formaldéhyde étant compris entre 1:1,15 et 1:4,5.

2. Produits de condensation selon la revendication 1, caractérisés en ce que l'on utilise, comme mélamine substituée, une mélamine substituée par le groupement 2-hydroxyéthylamino, une mélamine substituée par le groupement 2-hydroxypropylamino, une mélamine substituée par le groupement 5-hydroxy-3-oxapentylamino ou une mélamine substituée par le groupement 6-aminohexylamino.

3. Produits de condensation selon la revendication 1 ou 2, caractérisés en ce que l'on utilise un phénol choisi dans le groupe du phénol, du 2,2-bis(4-hydroxyphényl)propane et du résorcinol.

4. Procédé de préparation de produits de condensation selon la revendication 1, caractérisé en ce que l'on condense les composants (A) et (B) avec du formaldéhyde ou des composés générateurs de formaldéhyde à des températures de 20 à 150°C et sous des pressions de 100 à 500 kPa, dans la masse ou dans un solvant.

5. Utilisation des produits de condensation selon la revendication 1 pour la fabrication de corps moulés, en particulier de fibres et de mousses.

6. Corps moules, obtenus à partir de produits de condensation selon la revendication 1.
